# EUROPÄISCHE PATENTANMELDUNG

(11) **EP 0 620 078 A2**
(43) Veröffentlichungstag der Anmeldung: **19.10.1994**
(21) Anmeldenummer: 94104128.7
(22) Anmeldetag: 16.03.1994
(51) Int. Cl.: B23Q 7/04, B23F 23/04

(54) **Vorrichtung zum automatischen Zuführen, Eingeben und Abführen von Werkstücken bei Werkzeugmaschinen**

(30) Priorität: 18.03.1993 DE 4308676
(71) Anmelder: LIEBHERR-VERZAHNTECHNIK GmbH, D-87437 Kempten (DE)
(72) Erfinder: Schmid, Joachim, Dr., D-87463 Dietmannsried (DE); Schilling, Manfred, D-87490 Haldenwang (DE)
(74) Vertreter: Klunker . Schmitt-Nilson . Hirsch

(57) **Zusammenfassung**

Bei der Vorrichtung zum automatischen Zuführen, Eingeben und Abführen von Werkstücken bei Werkzeugmaschinen, insbesondere Zahnradbearbeitungsmaschinen oder dergleichen, ist eine Handhabungseinrichtung 4 vorgesehen, die drei gegeneinander winkelig versetzt angeordnete Werkstück-Greifeinheiten 1, 2 und 3 aufweist, die mittels eines gemeinsamen, kombinierten Schwenk- und Hub-Getriebes 9, 10 um eine parallel zur Drehachse 20 einer Werkstück- bzw. Arbeitsspindel 13 verlaufende Schwenkachse 5 zyklisch zwischen drei Positionen verschwenkbar und in Richtung ihrer Schwenkachse 5 auf- und abwärts verschiebbar sind. Hierdurch wird erreicht, daß die Greifeinheiten 1, 2, 3 nacheinander in eine erste Position, d.h. eine Position der Aufnahme für unbearbeitete Werkstücke, sodann in eine zweite Position, d.h. eine Eingabeposition zum Eingeben des jeweils aufgenommenen Werkstücks in eine Spannvorrichtung 7, und schließlich in eine dritte Position, d.h. in eine Absetzposition um Absetzen des fertig bearbeiteten Werkstücks 8 gelangen.

Durch die neue Vorrichtung wird insbesondere bei der spanabhebenden Bearbeitung von Werkstücken eine automatische Werkstückzuführung, - eingabe und -abführung mit kurzen Wechselzeiten, geringem Investitionsaufwand, einfacher Bedienbarkeit und reduzierten Personalkosten sowie mit hoher Anwendungsflexibilität gewährleistet.

## Beschreibung

Die Erfindung betrifft eine Vorrichtung zum automatischen Zuführen, Eingeben und Abführen von Werkstücken bei Werkzeugmaschinen, insbesondere Maschinen zur spanabhebenden Bearbeitung, vorzugsweise Zahnradbearbeitungsmaschinen und dergleichen, mit den Merkmalen nach dem Oberbegriff des Patentanspruchs 1.

Aus der DE-OS 23 45 772 ist bereits eine Vorrichtung zur selbsttätigen Werkstückeingabe bei Werkzeugmaschinen bekannt, wobei ein Werkstückmagazin mit mehreren senkrechten Dornen zur Aufnahme jeweils eines Stapels von Werkstücken, zwei bewegliche Werkstückgreifzangen sowie ein Werkstückstapel-Hubwerk vorgesehen sind. Ferner ist bei dieser bekannten Vorrichtung das Werkstückmagazin um eine senkrechte Achse schrittweise drehbar, so daß jeweils ein Dorn vor das Hubwerk zum Anheben des Werkstückstapels auf dem Dorn und Einbringen mindestens des obersten Werkstücks des Stapels in die jeweils entsprechend angeordnete, geöffnete Greifzange gelangt, welche das bzw. die eingebrachten Werkstücke abnimmt. Daraufhin werden die beiden in der geschlossenen Greifzange gehaltenen Werkstücke in die Spanneinrichtung der Werkzeugmaschine eingesetzt. Hierbei sind die Werkstücke in der Greifzange so gehalten, daß sie darin rotieren können, was nicht nur die spanabhebende Bearbeitung bei geschlossener Greifzange ermöglicht, sondern auch das Ein- und Ausspannen der Werkstücke bei laufender Werkzeugmaschine. Die beiden Greifzangen dieser bekannten Werkstückeingabevorrichtung sind einander diametral gegenüberliegend angeordnet, wobei ferner das Werkstückmagazin jeweils zwischen zwei einander benachbarten Dornen zur Aufnahme bearbeiteter Werkstücke bzw. zur Abnahme zu bearbeitender Werkstücke hin- und hergeschaltet wird. Während die mittels der ersten Greifzange abgenommenen Werkstücke in der Werkzeugmaschine spanabhebend bearbeitet werden, befindet sich die zweite Greifzange in derjenigen Stellung, in welcher nunmehr zwei folgende Werkstücke in dieser zweiten Greifzange aufgenommen werden können. Werden die von der zweiten Greifzange umfaßten Werkstücke sodann zur Spanneinrichtung bewegt, dann gelangen gleichzeitig die von der ersten Greifzange umfaßten und bereits bearbeiteten Werkstücke wiederum über einen leeren Dorn des Werkstückmagazins und können somit auf diesem abgelegt werden. Anschließend wird ein neues Paar zu bearbeitender Werkstücke mittels der ersten Greifzange abgenommen, während gleichzeitig die beiden von der zweiten Greifzange umfaßten Werkstücke in der Werkzeugmaschine spanabhebend bearbeitet werden.

Die Bewegungsabläufe bei dieser bekannten Werkstückeingabevorrichtung lassen sich von einer entsprechend programmierten Steuereinrichtung aus kontrollieren, so daß ein vollkommen selbsttätiger Betrieb der Vorrichtung gewährleistet ist.

Ferner ist aus der DE-PS 35 21 501 eine automatisierte Handhabungseinrichtung für eine Zahnradbearbeitungsmaschine bekannt, wobei mittels dieser Handhabungseinrichtung verzahnte Werkstücke von einer Palette aufgenommen, einer automatischen Spannvorrichtung der Werkzeugmaschine zugeführt und nach erfolgter Bearbeitung aus dieser Spannvorrichtung wieder herausbewegt und auf der Palette abgesetzt werden. Diese bekannte Handhabungseinrichtung weist einen gefederten Greiferarm zum Ergreifen eines Werkstückes auf, wobei dieser Greiferarm mit einem durch Programmsteuerung vertikal und in mindestens einer Richtung horizontal bewegbaren Ladearm um eine zur Drehachse des Werkzeugs annähernd parallele Achse schwenkbar verbunden ist. Infolgedessen kann ein durch die Greiferbacken des Greiferarms erfaßtes Werkstück durch eine entsprechende Bewegung des Ladearms mit dem Werkzeug in oder außer Eingriff gebracht werden.

Die bekannten Vorrichtungen sind verhältnismäßig kompliziert ausgebildet und erfordern hinsichtlich Herstellung, Betrieb und Wartung einen relativ hohen Kostenaufwand, darüberhinaus genügen sie nicht mehr den in der Praxis gestiegenen Anforderungen an die Arbeitsgeschwindigkeit und die Integrationsfähigkeit in übergeordnete Logistiksysteme.

Der relevante Stand der Technik, von dem im Oberbegriff des Anspruchs 1 ausgegangen wird, ergibt sich aus der DE 33 36 885 A1, insbesondere der dortigen Figur 3 und der zugehörigen Beschreibung auf Seite 10, Zeile 15 bis Seite 11, Zeile 13. In dieser Druckschrift wird eine Ladeeinrichtung mit einem Greiferträger beschrieben, der auf einem gemeinsamen Teilkreis drei Werkstückgreifer aufweist, wobei die ersten und zweiten Werkstückgreifer zum dritten Werkstückgreifer jeweils einen Winkel von 80° bilden. Jeweils seitlich von dieser Ladeeinrichtung verlaufen ein Werkstückzuführband und ein Werkstückabführband parallel zueinander. In der in Figur 3 der DE-OS 33 36 885 dargestellten Position sind alle drei Werkstückgreifer hinter einem Späneschutz einer Drehmaschine angeordnet. Wenn ein Werkstückwechsel erfolgen soll, dann muß zunächst dieser Späneschutz durch Hochfahren geöffnet werden. Anschließend kann der Greiferträger mit den drei Werkstückgreifern um seine Schwenkachse geschwenkt werden, bis der zweite Werkstückgreifer ein Werkstück auf einer einem ersten Werkstücksupport zugeordneten Achse und der dritte Werkstückgreifer ein Werkstück auf einer einem zweiten Werkstücksupport zugeordneten Achse ergreifen kann. Der erste Werkstückgreifer ist dann in der Lage, ein Rohteil auf dem Werkstückzuführband zu greifen.

Nach dem Greifen der Werkstücke wird der Greiferträger weiter getaktet, bis der zweite Werkstückgreifer auf dem Werkstückabführband ein Fertigteil ablegen kann. In dieser Position fluchtet der dritte Werkstückgreifer mit der dem ersten Werkstücksupport zugeordneten Achse, während der erste Werkstückgreifer über der dem zweiten Werkstücksupport zugeordneten Drehachse steht, wodurch ein Rohteil in das Spannfutter auf dieser Drehachse eingesetzt werden kann.

Ferner kann das zuvor von der dem zweiten Werkstücksupport zugeordneten Drehachse zu der dem ersten Werkstücksupport zugeordneten Achse transportierte Halbfertigteil in dem Spannfutter der dem ersten Werkstücksupport zugeordneten Drehachse gespannt werden. Anschließend ist es erforderlich, daß der Greiferträger mit den drei Werkstückgreifern in die in Fig. 3 der DE-OS 33 36 885 dargestellte Position zurückgeschwenkt wird, so daß der Späneschutz wieder schließen und die Bearbeitung der beiden Werkstücke beginnen kann.

Hieraus folgt, daß der bekannte Greiferträger, um in seine Bearbeitungs-Ruhestellung zurückzugelangen, nach dem letzten Schwenkschritt eines Arbeitszyklus entgegen der bisherigen Schwenkrichtung bewegt werden muß, so daß für einen vollständigen Zyklus relativ viel Zeit benötigt wird. Ferner sind infolge der Umkehr der Drehrichtung zusätzliche Überwachungs- und Steuerungselemente erforderlich, welche die Störanfälligkeit der bekannten Ladeeinrichtung erhöhen. Schließlich muß die Schwenkachse sowie der Greiferträger selbst aufgrund seines asymmetrischen Aufbaus verhältnismäßig massiv und schwer gebaut werden, da immer nur eine einseitige Belastung dieser Teile aufgrund eines nicht durch entsprechende konstruktive Maßnahmen, d. h. Symmetrie kompensierten Biegemomentes auftritt.

Die DE-36 31 718 A1 beschreibt eine Ladeeinrichtung für Drehmaschinenanordnungen mit mindestens zwei Arbeitsspindeln, z. B. zweispindelige Vertikaldrehmaschinen oder andere mehrspindelige Drehmaschinen. Die aus dieser Druckschrift bekannte Ladeeinrichtung besteht im wesentlichen aus einer Schwenkachse, einem Greiferträger mit zwei im Winkel von 60° gekreuzten Armen, an deren freien Enden jeweils ein Greifer angebracht ist (somit insgesamt vier Greifer), zwei zwischen den Arbeitsspindeln und dem Greiferträger angeordneten Schutzwänden, eine Wendevorrichtung und einer Werkstückzuführ- bzw. Werkstückabführvorrichtung. Ferner befindet sich hierbei die Schwenkachse des Greiferträgers auf einer Linie zwischen den Spindelachsen. Hierdurch soll der notwendige Schwenkradius als Abstand zwischen dem Greiferträgermittelpunkt und einem Greifer bzw. einer Spindel stets kleiner sein als bei einer dreiecksförmigen Anordnung der Schwenkachse zu den Arbeitsspindeln bei gleichem Abstand der Spindeln zueinander. Insbesondere ist bei dieser bekannten Ladeeinrichtung noch vorgesehen, daß der Greiferträger in eine Ruhestellung außerhalb des Arbeitsbereiches der Spindeln schwenkbar und in dieser mittels Schutzwänden, die zum Be- und Entladen der Spindeln verfahrbar sind, von dem Arbeitsbereich der Spindeln abschirmbar ist. Diese Schutzwände ermöglichen es, die empfindliche Mechanik des Greiferträgers, der Greifer und des Schwenkmechanismus vor Spänen und Bearbeitungsflüssigkeiten sicher und wirkungsvoll zu schützen. Wie ersichtlich, handelt es sich hierbei um eine im Vergleich mit dem Gegenstand des vorliegenden Patents völlig anders gestaltete Ladeeinrichtung mit kreuzweise angeordneten Greifern.

Die DE-OS 24 41 793 behandelt eine Vorrichtung zur Beschickung von Bearbeitungswerkzeugen mit Werkstücken, wobei eine Zuführstation vorgesehen ist, die aus einem drehbaren Winkelarm besteht, an dessen beiden äußeren Enden jeweils eine Zange zum Ergreifen jeweils eines Werkstückes angeordnet ist. Die erste Zange dieses Schwenkarms nimmt Werkstücke aus einem Magazin ab und legt sie dem Werkzeug vor, während gleichzeitig die zweite Zange ein fertiges Werkstück vom Werkzeug zu einer Entnahmekammer fördert und dort ablegt. Bei diesem Vorgang pendelt der Winkelarm gleichsam zwischen zwei Endstellungen hin und her und beschreibt einen Kreisbogen derart, daß sich die Zangen einmal im Uhrzeigersinne und zum anderen entgegen dem Urhrzeigersinne bewegen (vgl. Pfeile 15 und 18 gemäß Fig. 2 der DE-OS 24 41 793).

Noch weiter abliegend ist der Gegenstand der EP 0 076 419 A2, welche ein Verfahren und eine Vorrichtung zum Spannen von Werkstücken beschreibt, wobei das Werkstück durch eine Spanneinrichtung, die ein zentrisches Spannen ermöglicht, außerhalb eines Spannfutters einer Werkzeugmaschine gespannt wird und dieses gespannte Werkstück in der zentrischen Spannlage dem Spannfutter der Werkzeugmaschine ausgerichtet dargeboten wird, so daß sich die ausgleichend spannenden Spannbacken des Spannfutters an dieses Werkstück anlegen können.

Der vorliegenden Erfindung liegt die Aufgabe zugrunde, eine verbesserte Konstruktionsweise einer Vorrichtung mit den Merkmalen des Oberbegriffs des Patentanspruchs 1 zu schaffen, die bei der spanabhebenden Bearbeitung von Werkstücken, insbesondere Zahnradrohlingen, eine automatische Werkstückzuführung, -eingabe und -abführung mit kurzen Wechselzeiten, geringem Investitionsaufwand, einfacher Bedienbarkeit und reduzierten Personalkosten sowie mit hoher Anwendungsflexibilität gewährleistet.

Diese Aufgabe wird gemaß der Erfindung durch die Kombination der Mekmale gelöst, daß drei Greifeinheiten mit gleichen bzw. annähernd gleichen gegenseitigen Winkelabständen an der gemeinsamen Halterung befestigt sind, die mit der Antriebseinrichtung gekoppelt ist, durch den Schwenkvorgang auf einem Schwenkkreis nacheinander in eine erste Position, d. h. eine Aufnahmeposition für unbearbeitete Werkstücke, eine zweite Position, d. h. eine Eingabeposition zum Eingeben des jeweils aufgenommenen Werkstücks in die Spannvorrichtung, und in eine dritte Position, d. h. eine Absetzposition zum Absetzen der fertig bearbeiteten Werkstücke gelangen, und mittels der gemeinsamen Antriebseinrichtung zusätzlich in Richtung ihrer Schwenkachse auf- und abwärts verschiebbar sind, wobei die Antriebseinrichtung in der Form eines mechanisch unstetigen, zangsläufigen Zentralantriebs mit zentraler Kraftquelle ausgebildet ist.

Jeweils vorteilhafte, weitere Ausgestaltungen der Erfindung ergeben sich aus den Unteransprüchen.

Als Kerngedanke der Erfindung wird es angesehen, drei Greifeinheiten mit gleichen bzw. annähernd gleichen gegenseitigen Winkelabständen an der gemeinsamen Halterung zu befestigen, die mit der Antriebseinrichtung gekoppelt ist, so daß diese Greifeinheiten durch den Schwenkvorgang auf einem Schwenkkreis nacheinander in eine erste Position, d. h. in eine Aufnahmeposition für unbearbeitete Werkstücke, eine zweite Position, d. h. eine Eingabeposition zum Eingeben des jeweils aufgenommenen Werkstücks in die Spannvorrichtung, und in eine dritte Position, d. h. eine Absetzposition zum Absetzen der fertig bearbeiteten Werkstücke gelangen, in Verbindung mit den weiteren Merkmalen, daß die drei Greifeinheiten mittels ihrer gemeinsamen Antriebseinrichtung zusätzlich in Richtung ihrer Schwenkachse auf- und abwärts verschiebbar sind, wobei diese Antriebseinrichtung in der Form eines mechanisch untätigen, zwangsläufigen Zentralantriebs mit zentraler Kraftquelle ausgebildet ist.

Bei einem Zentralantrieb von dieser Art handelt es sich um einen Antrieb mit mehreren Antriebsfunktionen derart, daß alle drei Werkstückgreifeinheiten mittels dieses Zentralantriebs zu ihren sämtlichen erforderlichen Bewegungen veranlaßt werden. In keiner der im vorangehenden zum Stand der Technik erläuterten Druckschriften wird die Anwendung eines solchen mechanisch unstetigen, zwangsläufigen Zentralantriebs als gemeinsame Antriebseinrichtung für Werkstückgreifeinheiten beschrieben, vielmehr geht aus diesen Druckschriften im wesentlichen hervor, daß für die dortigen Ladeeinrichtungen jeweils Einzelachsantriebe vorgesehen sind, welche durch Folgeschrittssteuerungen koordiniert sind. Die hierbei auftretenden, intermittierenden pendelnden Bewegungsabläufe sind mit den durch den, bei der vorliegenden Erfindung vorgesehenen Zentralantrieb erzeugten Bewegungsabläufen nicht vergleichbar.

Zur näheren Erläuterung der Erfindung dient die nachfolgende Beschreibung von bevorzugten Ausführungsbeispielen unter Bezugnahme auf die beigefügten Zeichnungen.

Dabei zeigen:
- **Fig. 1**: eine schematische Draufsicht auf eine Vorrichtung zum automatischen Zuführen, Eingeben und Abführen von Werkstücken bei Werkzeugmaschinen mit einer Handhabungseinrichtung;
- **Fig. 2**: eine schematische Seitenansicht einer für die Vorrichtung gemäß Fig. 1 verwendbaren Handhabungseinrichtung, mit welcher Werkstücke aufeinanderfolgend einer Werkstück-Spannvorrichtung zugeführt und nach der Bearbeitung wieder abgeführt werden;
- **Fig. 3**: eine schematische Seitenansicht eines Greiffingers einer Greifeinheit, welche einen Bestandteil der Handhabungseinrichtung gemäß Fig. 1 bzw. 2 bildet;
- **Fig. 4**: eine schematische Teil-Schnittansicht einer Vorrichtung zum Spannen von Werkstücken auf der Arbeits- bzw. Werkstückspindel einer Werkzeugmaschine, gemäß einer ersten Ausführungsform, und
- **Fig. 5**: eine weitere schematische Seitenansicht einer Vorrichtung zum Spannen von Werkstücken auf der Arbeits- bzw. Werkstückspindel der Werkzeugmaschine, gemäß einer zweiten Ausführungsform.

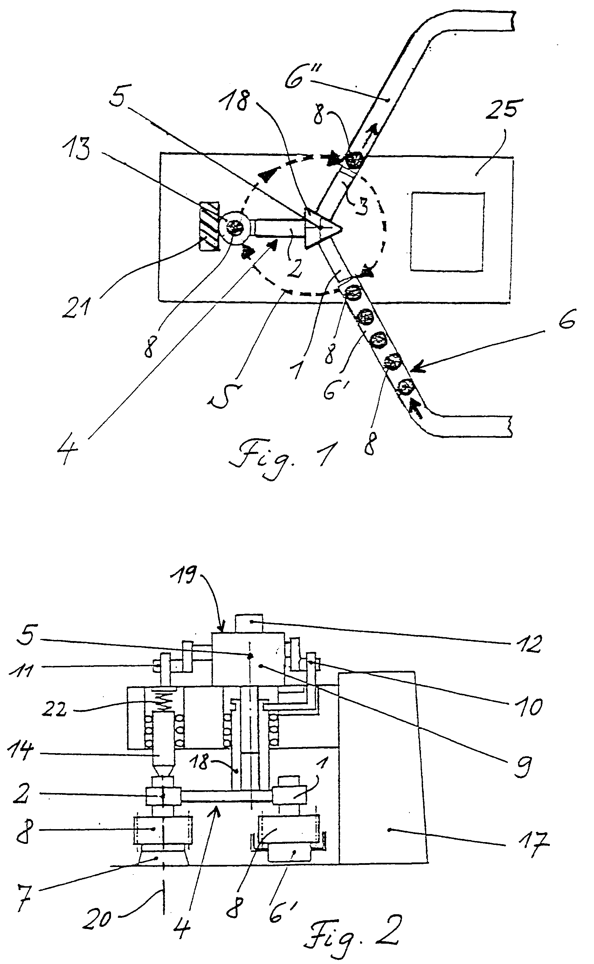

In der Fig. 1 ist schematisch eine Handhabungseinrichtung 4 dargestellt, welche zu einer Vorrichtung zum automatischen Zuführen, Eingeben und Abführen von Werkstücken bei einer im einzelnen nicht dargestellten Werkzeugmaschine, beispielsweise einer Zahnradbearbeitungsmaschine, gehört, wobei mit Hilfe dieser Handhabungseinrichtung 4 Werkstücke 8 aufeinanderfolgend einer Spannvorrichtung der Werkzeugmaschine zugeführt und nach der Bearbeitung wieder abgeführt werden. Eine derartige Spannvorrichtung ist beispielsweise aus Fig. 2 ersichtlich und dort mit der Bezugsziffer 7 bezeichnet.

Wie sich ferner aus Fig. 1 ersehen läßt, ist der Handhabungseinrichtung 4 eine Transporteinrichtung 6 zum Transportieren der Werkstücke zugeordnet, wobei diese Transporteinrichtung 6 einerseits eine der Werkstückform angepaßte erste Transportrinne 6' zum Transportieren der Werkstücke in Richtung zu der Handhabungseinrichtung 4 hin und andererseits eine zweite Transportrinne 6'' zum Abtransportieren der fertig bearbeiteten und von der Handhabungseinrichtung 4 wieder freigegebenen Werkstücke 8 aufweist.

Die im folgenden noch näher zu erläuternde Handhabungseinrichtung 4 sowie die Transporteinrichtung 6 sind in entsprechender gegenseitiger Zuordnung oberhalb eines Maschinenbettes 25 der Werkzeugmaschine angeordnet. Im einzelnen besteht die Handhabungseinrichtung 4 aus drei gegeneinander winkelig versetzt angeordneten Werkstück-Greifeinheiten 1, 2 und 3, die mittels eines zu einer gemeinsamen Antriebseinrichtung gehörigen Schwenk-Getriebes 9 (vgl. Fig. 2) um eine parallel zur Drehachse 20 einer Werkstück- bzw. Arbeitsspindel 13 verlaufende Schwenkachse 5 zyklisch zwischen drei Positionen derart verschwenkbar sind, daß die Greifeinheiten 1, 2 und 3, wie dies genau aus der in Fig. 1 dargestellten Anordnung hervorgeht, nacheinander in eine erste Position, d.h. in eine Aufnahmeposition für unbearbeitete Werkstücke 8, eine zweite Position, d.h. eine Eingabeposition zum Eingeben des jeweils aufgenommenen Werkstücks 8 in die Spannvorrichtung 7 (vgl. Fig. 2) und in eine dritte Position, d.h. eine Absetzposition zum Absetzen der fertig bearbeiteten Werkstücke 8 gelangen. Wie aus Fig. 1 zu ersehen ist, befindet sich die erste Greifeinheit 1 in der Aufnahmeposition zum Aufnehmen eines unbearbeiteten Werkstücks 8 aus der Transportrinne 6' der Transporteinrichtung 6, die zweite Greifeinheit 2 in der Eingabeposition zum Eingeben des aufgenommenen Werkstückes 8 in die Spannvorrichtung 7 (vgl. Fig. 2) und die dritte Greifeinheit 3 in der Absetzposition zum Absetzen bzw. Abgeben des jeweils fertig bearbeiteten Werkstücks 8 in die Transportrinne 6' zum Abtransportieren der fertigen Werkstücke mit Hilfe der Transporteinrichtung 6, die in Fig. 1 der Einfachheit halber lediglich teilweise dargestellt ist.

Mit Hilfe der in Fig. 1 dargestellten Vorrichtung können die unbearbeiteten Werkstücke 8, oder kurz gesagt, die "Rohteile", während des Arbeitsvorganges der Werkzeugmaschine, beispielsweise Zahnradbearbeitungsmaschine, radial zu dem in Fig. 1 mit S bezeichneten Schwenkkreis der Handhabungseinrichtung 4 mit ihren drei Greifeinheiten 1, 2 und 3 an der Aufnahmeposition in die gerade dort befindliche Greifeinheit 1 einlaufen. Gleichzeitig zu diesem Vorgang kann das fertig bearbeitete Werkstück 8, oder kurz gesagt das "Fertigteil", ebenfalls gleichsam in Radialrichtung die gerade in der Absetzposition befindliche Greifeinheit 3 verlassen und hierbei in die Transportrinne 6'' der Transporteinrichtung 6 übergeführt werden. Diese als separate Baugruppe ausgeführte Transporteinrichtung 6 ist parallel zur Ebene des Schwenkkreises S angeordnet.

Wie sich aus der Fig. 2 ersehen läßt, sind die drei Greifeinheiten 1, 2 und 3 der Handhabungseinrichtung 4 mittels eines zu der gemeinsamen Antriebseinrichtung gehörigen Hub-Getriebes 10 zusätzlich in Richtung ihrer Schwenkachse 5 auf- und abwärts verschiebbar. Eine besonders vorteilhafte Ausgestaltung dieser Anordnung besteht darin, daß die drei Greifeinheiten 1, 2 und 3 sternförmig, d.h. mit gegenseitigem Winkelabstand von ca. 120°, an einer gemeinsamen Halterung 18 befestigt sind, welche mit der Antriebseinrichtung gekoppelt ist.

Diese Antriebseinrichtung mit ihren Schwenk- und Hub-Getrieben 9 und 10 ist als ein mechanisch unstetiger, zwangsläufiger Zentralantrieb 19 mit zugehöriger, zentraler Kraftquelle 12 ausgebildet. Die Betätigung der kompletten Handhabungseinrichtung 4 erfolgt somit mittels der kombinierten, mechanischen Schwenk- und Hubgetriebe 9 und 10, welche von der gemeinsamen, zentralen Kraftquelle 12 aus mit Antriebsenergie versorgt werden. Infolgedessen sind für die Synchronisierung der aufeinanderfolgenden Arbeitsvorgänge zusätzliche Steuerungselemente nicht erforderlich. Auf diese Weise ist ein zwangsläufiger, zeitoptimierter Bewegungsablauf ohne Schalt- und Wartezeiten gewährleistet.

Zum Zwecke des Werkstückwechsels an der Arbeits- bzw. Werkstückspindel 13 werden die drei Greifeinheiten 1, 2 und 3 der Handhabungseinrichtung 4 in Vertikalrichtung, d.h. in Richtung ihrer Schwenkachse 5, angehoben, sodann um 120° entsprechend dem Schwenkkreis S geschwenkt und anschließend wieder in Vertikalrichtung, d.h. in Richtung der Schwenkachse 5, abgesetzt. Die Handhabungseinrichtung 4 befindet sich in Ruhestellung, solange das Werkstück 8 sich in der Spannvorrichtung 7 der Werkzeugmaschine befindet und beispielsweise mit Hilfe des in Fig. 1 schematisch dargestellten Werkzeugs 21 spanabhebend bearbeitet wird.

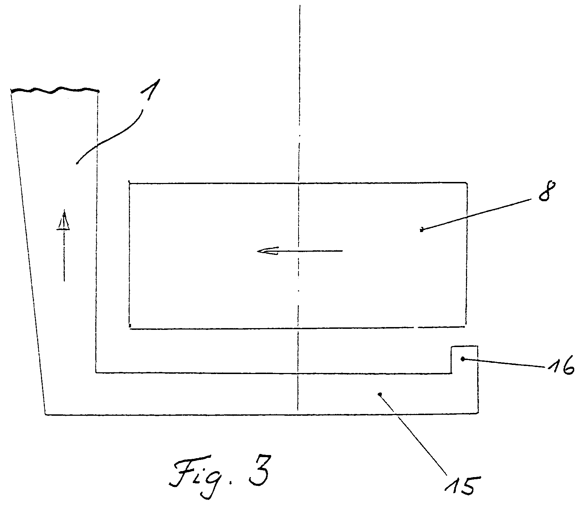

Alle drei Greifeinheiten 1, 2 und 3 der Handhabungseinrichtung 4 sind an ihren freien Enden jeweils mit Greiffingern zum Greifen jeweils eines Werkstückes 8 versehen. Ein entsprechendes Ausführungsbeispiel zeigt Fig. 3. In dieser ist schematisch ein Endabschnitt, beispielsweise einer Greifeinheit 1 in Seitenansicht dargestellt, wobei dieser Endabschnitt einen starren Greiffinger 15 mit einem Umgriff 16 aufweist, derart, daß die Werkstücke 8 radial zum Schwenkkreis S der Greifeinheiten 1, 2 und 3 (vgl. Fig. 1) ein- bzw. auslaufen können, sobald sich jeweils eine dieser Greifeinheiten in der Aufnahmeposition für unbearbeitete Werkstücke bzw. in der Absetzposition zum Absetzen der fertig bearbeiteten Werkstücke 8 befindet.

Anstelle von starren Greiffingern können aber auch an den freien Enden der Greifeinheiten 1, 2 und 3 jeweils beweglich ausgebildete Greiffinger zum Greifen der Werkstücke 8 vorgesehen sein, was im einzelnen in den Zeichnungen nicht dargestellt ist.

Unter Bezugnahme auf Fig. 2 wird ferner noch erläutert, daß im Rahmen der vorliegenden Erfindung noch die Möglichkeit besteht, auch das Spannen der Werkstücke 8 auf der Arbeits- bzw. Werkstückspindel 13 durch die Schwenk- und Hubgetriebe 9 und 10 zu betätigen, die durch einen zusätzlichen Übertragungsmechanismus 11 ergänzt sind, welcher für eine selbsttätige Ausführung des Spannvorganges dient. Zu diesem Zweck steht der Übertragungsmechanismus 11 mit dem Zentralantrieb 19 für die Greifeinheiten 1, 2 und 3 der Handhabungseinrichtung 4 in Wirkverbindung, wie in Fig. 2 dargestellt. Im einzelnen weist dieser Übertragungsmechanismus 11 einen mittels einer Feder 22 vorgespannten Stößel 14 auf, welcher in Axialrichtung, d.h. in Richtung der Drehachse 20 der Arbeits- bzw. Werkstückspindel 13 auf das Werkstück 8 drückt, wobei, wie im einzelnen aus der Fig. 4 ersichtlich ist, zwischen dem Werkstück 8 und der Arbeits- bzw. Werkstückspindel 13 die Spannvorrichtung 7 angeordnet ist.

Bei diesem Ausführungsbeispiel wird praktisch das Werkstück 8 mittels des Stößels 14 auf die Spannvorrichtung 7 gepreßt.

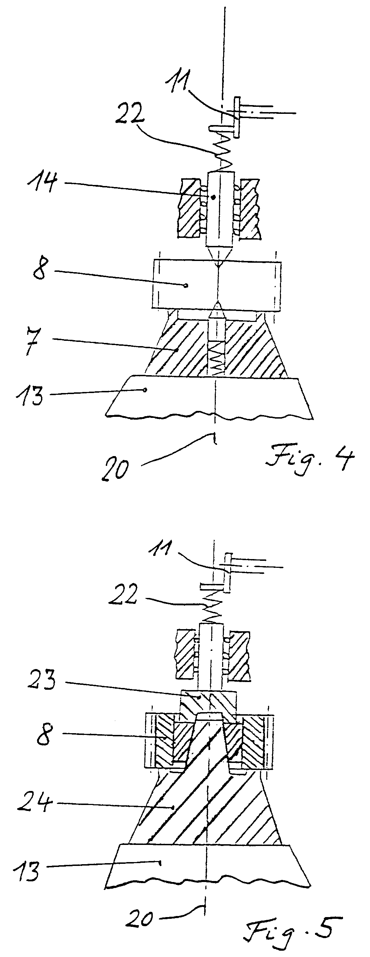

Eine alternative Ausführungsform der Vorrichtung zum Spannen der Werkstücke zeigt die Fig. 5. Hieraus ist ersichtlich, daß der Übertragungsmechanismus 11, der selbst gemäß Fig. 2 mit dem Zentralantrieb 19 gekoppelt ist, einen Stößel 23 aufweist, welcher mittels einer Feder 22 vorgespannt ist. Dieser mittels des Übertragungsmechanismus 11 beaufschlagte Stößel 23 wirkt mit seinem unteren Endabschnitt auf eine stirnseitige Betätigungsfläche einer entsprechend ausgeführten und angeordneten Spannvorrichtung 24 ein, wobei im Bereich zwischen dem Stößel 23 und der Spannvorrichtung 24 wiederum das Werkstück 8 eingespannt ist. Die Spannvorrichtung 24 ist hierbei wiederum auf der Arbeits- bzw. Werkstückspindel 13 angeordnet, welche im Falle der Bearbeitung des Werkstückes 8 um ihre Drehachse 20 rotiert.

Aufgrund der beispielsweise in Fig. 4 und 5 dargestellten Anordnungen erübrigt sich die Ausführung einer separaten Spannfunktion und der hiermit verbundene Geräte- und Zeitaufwand.

Darüberhinaus besteht im Rahmen der vorliegenden Erfindung noch die Möglichkeit einer zwangsläufigen Betätigung der Spannvorrichtung beim Absetzen des jeweiligen Werkstückes, indem beispielsweise die entsprechende Greifeinheit, d.h. beispielsweise die in Fig. 2 dargestellte, in der Eingabeposition befindliche Greifeinheit 2, entweder unmittelbar oder über das jeweilige Werkstück eine entsprechend ausgestaltete Spannvorrichtung niederdrückt, was jedoch in den Zeichnungen im einzelnen nicht dargestellt ist.

Aus Fig. 2 ist noch ersichtlich, daß die gesamte Handhabungseinrichtung 4 zusammen mit dem Zentralantrieb 19 an einem entsprechenden Ständer 17 der Werkzeugmaschine angebracht ist.

Die erfindungsgemäß ausgebildete Vorrichtung zum automatischen Zuführen, Eingeben und Abführen von Werkstücken bei Werkzeugmaschinen besitzt insbesondere den Vorteil, daß bei der spanenden Bearbeitung von Werkstücken die Nebenzeiten für das Zuführen der Rohteile an die Bearbeitungsstelle und für das Entfernen der Fertigteile von dieser minimiert werden, was zu einer Reduzierung der Personalkosten und damit zur Erhöhung der Wirtschaftlichkeit des Einsatzes derartiger Werkzeugmaschinen führt.

Insbesondere wird bei der erfindungsgemäßen Vorrichtung erreicht, daß die für das Auf- und Absetzen der Werkstücke erforderlichen Bewegungen in Anzahl und Wegstrecke auf ein Mindestmaß reduziert werden.

## Patentansprüche

1. Vorrichtung zum automatischen Zuführen, Eingeben und Abführen von Werkstücken bei Werkzeugmaschinen, insbesondere Maschinen zur spanabhebenden Bearbeitung, vorzugsweise Zahnradbearbeitungsmaschinen oder dergleichen, wobei die Vorrichtung eine mit Antriebsorganen versehene Handhabungseinrichtung aufweist, mittels der Werkstücke aufeinanderfolgend einer Spannvorrichtung der Werkzeugmaschinen zugeführt und nach der Bearbeitung abgeführt werden und wobei die Handhabungseinrichtung (4) mindestens drei an einer gemeinsamen Halterung (18), gegeneinander winkelig versetzt angeordnete Werkstück-Greifeinheiten (1, 2, 3) aufweist, die mittels einer gemeinsamen Antriebseinrichtung (9, 10) um eine parallel zur Drehachse (20) einer Werkstück- bzw. Arbeitsspindel (13) verlaufende Schwenkachse (5) zyklisch zwischen drei Positionen verschwenkbar sind,
**dadurch gekennzeichnet,**
daß drei Greifeinheiten (1, 2, 3) mit gleichen bzw. annähernd gleichen gegenseitigen Winkelabständen an der gemeinsamen Halterung (18) befestigt sind, die mit der Antriebseinrichtung (9, 10) gekoppelt ist, durch den Schwenkvorgang auf einem Schwenkkreis (S) nacheinander in eine erste Position, d.h. in eine Aufnahmeposition für unbearbeitete Werkstücke (8), eine zweite Position, d.h. eine Eingabeposition zum Eingeben des jeweils aufgenommenen Werkstückes in die Spannvorrichtung (7) und in eine dritte Position, d.h. eine Absetzposition zum Absetzen der fertig bearbeiteten Werkstücke gelangen, und mittels der gemeinsamen Antriebseinrichtung (9, 10) zusätzlich in Richtung ihrer Schwenkachse (5) auf- und abwärts verschiebbar sind, wobei die Antriebseinrichtung (9, 10) in der Form eines mechanisch unstetigen, zwangsläufigen Zentralantriebes (19) mit zentraler Kraftquelle (12) ausgebildet ist.

2. Vorrichtung nach Anspruch 1,
**dadurch gekennzeichnet,**
daß die drei Greifeinheiten (1, 2, 3) an ihren freien Enden jeweils mit Greiffingern zum Greifen der Werkstücke (8) versehen sind.

3. Vorrichtung nach Anspruch 2,
**dadurch gekennzeichnet,**
daß die Greiffinger beweglich ausgebildet sind.

4. Vorrichtung nach Anspruch 2,
**dadurch gekennzeichnet,**
daß die Greifeinheiten (1, 2, 3) jeweils mit starren Greiffingern (15) versehen sind, in welche die Werkstücke (8) radial zum Schwenkkreis (S) der Greifeinheiten (1, 2, 3) ein- bzw. auslaufen können.

5. Vorrichtung nach einem der vorhergehenden Ansprüche,
**dadurch gekennzeichnet,**
daß die Handhabungseinrichtung (4) zusätzlich mit einer zum Spannen der Werkstücke (8) auf der Arbeits- bzw. Werkstückspindel (13) dienenden Vorrichtung kombiniert ist, die einen mit dem Zentralantrieb (19) für die Greifeinheiten (1, 2, 3) in Wirkverbindung stehenden Übertragungsmechanismus (11) aufweist.

6. Vorrichtung nach einem der Ansprüche 1 bis 4,
**dadurch gekennzeichnet,**
daß das Spannen der Werkstücke (8) auf der Arbeits- bzw. Werkstückspindel (13) durch Niederdrücken der Werkstücke (8) oder eines Betätigungselementes einer Vorrichtung zum Spannen durch die jeweils in der Eingabeposition befindliche Greifeinheit (1 bzw. 2 bzw. 3) bewirkt wird.
